Europäisches Patentamt

European Patent Office

Office européen des brevets

(19)

(11) Veröffentlichungsnummer: **0 235 687 B1**

# (12) EUROPÄISCHE PATENTSCHRIFT

(45) Veröffentlichungstag der Patentschrift: **11.09.91**

(51) Int. Cl.5: **G01C 19/64**

(21) Anmeldenummer: **87102357.8**

(22) Anmeldetag: **19.02.87**

(54) **Einrichtung zur Messung der Drehgeschwindigkeit.**

(30) Priorität: **01.03.86 DE 3606802**

(43) Veröffentlichungstag der Anmeldung:
**09.09.87 Patentblatt 87/37**

(45) Bekanntmachung des Hinweises auf die
Patenterteilung:
**11.09.91 Patentblatt 91/37**

(84) Benannte Vertragsstaaten:
**DE FR GB IT NL**

(56) Entgegenhaltungen:
**EP-A- 0 030 891**

OPTICS LETTERS, Band 6, Nr. 2, Februar
1981, Seiten 64-66, Optical Society of America, New York, US; K. BÖHM et al.: "Low-noise
fiber-optic rotation sensing"

THIRD INTERNATIONAL CONFERENCE ON IN-
TEGRATED OPTICS AND OPTICAL FIBER
COMMUNICATION, San Francisco, 27.-29.
April 1981, OSA/IEEE, Seiten 130-132, Digest
of Technical Papers, WL5; C.H. BULMER et
al.: "Fiber-coupled phase-shifter for use in
optical gyroscopes"

APPLIED OPTICS, Band 19, Nr. 17, 1. September 1980, Seiten 2926-2929; D.A. JACKSON et
al.: "Elimination of drift in a single-mode
optical fiber interferometer using a piezoelectrically stretched coiled fiber"

(73) Patentinhaber: **TELDIX GmbH**
**Grenzhöfer Weg 36 Postfach 105608**
**W-6900 Heidelberg 1(DE)**

(72) Erfinder: **Baron, Klaus Uwe, Dr. rer. nat.**
**Turnerstrasse 11**
**W-6900 Heidelberg 1(DE)**
Erfinder: **Kiesel, Eberhard, Dipl.-Phys.**
**Friedrichsfelder Strasse 19**
**W-6803 Edingen(DE)**

(74) Vertreter: **Kammer, Arno, Dipl.-Ing.**
**TELDIX GmbH Postfach 10 56 08 Grenzhöfer**
**Weg 36**
**W-6900 Heidelberg 1(DE)**

## Beschreibung

Stand der Technik

Die Erfindung geht aus von einer Einrichtung zur Messung der Drehgeschwindigkeit nach der Gattung des Hauptanspruchs.

Eine derartige Einrichtung ist bekannt (EP-A 123 499).

Eine solche Einrichtung - auch Faserkreisel genannt - überlagert innerhalb eines geschlossenen Lichtweges der beispielsweise aus einer Lichtleitfaser besteht, die zu einer Spule gewickelt ist, zwei Lichtstrahlen. Deren Interferenz wird mit einer Auskoppeloptik und einer Photodiode in einer nachgeschalteten Auswerteeinrichtung ermittelt und stellt ein Maß für die auf den Faserkreisel einwirkende Drehgeschwindigkeit dar.

Zur Phasen-Modulation der Lichtstrahlen wird bevorzugt ein Piezomodulator verwendet, d.h., ein Teil des Lichtweges ist auf einem zylinderförmigen Piezoelement aufgewickelt. Durch Anlegen einer Wechselspannung an den Modulator wird dieser Teil des Lichtweges durch die der Spannung proportionalen Ausdehnung des Zylinders in seiner Länge moduliert. Der Modulator ist üblicherweise an einem Ende der Spule, beispielsweise zwischen Spule und Hauptstrahlteiler angeordnet.

Ein Nachteil dieser Anordnung ist jedoch die Unsymmetrie bezüglich der beiden an den Enden der Spulen eingekoppelten Lichtstrahlen. Diese führt vor allem bei Temperaturänderungen im Bereich des Modulators zu einer Verfälschung des Meßergebnisses.

Aufgrund der physikalisch notwendigen Anordnung des Modulators am Spulenende passieren die entgegengesetzt durch die Spule laufenden Lichtstrahlen den Modulator zu unterschiedlichen Zeiten. Der Zeitunterschied ist bestimmt durch die Laufzeit des Lichtes durch die Spule. Bei einer zeitlichen Temperaturänderung des Modulators ändert sich durch thermische Expansion die Länge der um den Modulator gewickelten Lichtleitfaser als Funktion der Zeit. Aufgrund der Laufzeitdifferenz der Lichtwellen passieren beide Wellen den Modulator in unterschiedlichen Temperatur- und somit Ausdehnungszuständen. Die dadurch bedingt zusätzliche Phasenverschiebung kann vom Nutzsignal nicht getrennt werden und führt zur Störung der Meßergebnisse.

Vorteile der Erfindung

Die Einrichtung zur Messung der Drehgeschwindigkeit mit den kennzeichnenden Merkmalen des Hauptanspruchs hat demgegenüber den Vorteil, daß sich thermische Veränderungen der Lichtleitfasern symmetrisch auswirken und damit auf beide Lichtstrahlen gleichermaßen einwirken.

Vorteilhafterweise wird der Teil des Lichtweges, der moduliert werden soll, auf einen Piezozylinder gewickelt und der Teil des Lichtweges, der symmetrisch zu dem ersten Teil angeordnet ist, auf einen zylindrischen Wickelkörper. Es hat sich weiterhin als vorteilhaft erwiesen, wenn Wickelkörper und Piezozylinder gleiche Abmessungen und gleiche Temperaturausdehnungskoeffizienten aufweisen sowie die gleiche Anzahl Windungen der Lichtleitfaser auf den Zylindern aufgewickelt ist.

Andererseits ist es aber auch möglich, unterschiedliche Temperaturausdehnungskoeffizienten durch unterschiedliche Anzahl von Windungen auszugleichen. Beispielsweise würde ein sehr hoher Temperaturausdehnungskoeffizient des Wickelkörpers in Bezug zu dem des Piezozylinders eine geringere Anzahl von Windungen auf dem Wickelkörper bedeuten.

Von Vorteil ist es, den Wickelkörper ebenfalls als Piezoelement auszubilden. Weiterbildungsgemäß wird vorgeschlagen, das Gehäuse, welches beide Teile umfaßt, zur thermischen Kopplung zu benutzen. Damit wird weitgehend eine Schwingungsübertragung von dem Piezoelement auf den Wickelkörper vermieden.

Weitere Vorteile der Erfindung ergeben sich aus der Beschreibung und aus den abhängigen Ansprüchen.

Ein Ausführungsbeispiel der Erfindung wird nachfolgend anhand der Zeichnung erläutert. Es zeigen

Fig. 1    in schematischer Darstellung den Aufbau eines Faserkreisels,

Fig. 2    die Modulationseinrichtung in Schnittdarstellung.

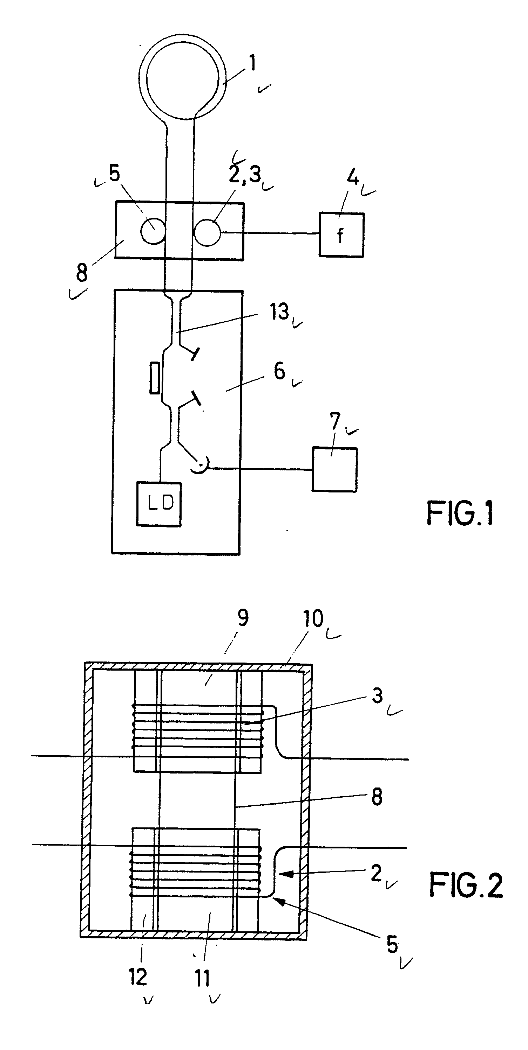

Der in Fig. 1 gezeigte Faserkreisel besteht aus einer ringförmig gewickelten Lichtleitfaser 1, die mehrere Windungen aufweist. Ein Ende der Lichtleitfaser 1 wird über die Modulationseinrichtung 2 bestehend aus einem zylindrischen Piezoelement 3, auf dem sich mehrere Windungen der Lichtleitfaser befinden, geführt. Das Piezoelement 3 wird über einen Frequenzgenerator 4 angesteuert und moduliert damit die Länge des Teils der Lichtleitfaser, die sich auf dem Piezoelement befindet. Das andere Ende der Lichtleitfaser ist auf einen Wickelkörper 5 geführt, dessen Abmessungen denen des Piezoelements entsprechen. Außerdem ist die Anzahl der Windungen der Lichtleitfaser auf dem Wickelkörper und dessen thermischer Ausdehnungskoeffizient mit denen des Piezoelements identisch. Die Lichtleitfaser 1 endet mit ihren beiden Anschlüssen im Hauptstrahlteiler 13 der Koppeloptik 6. Das über eine Fotodiode empfangene Signal wird der Auswerteschaltung 7 zugeführt und dort verarbeitet. Die Auswerteschaltung erhält ferner das Signal 5 der Modulationsfrequenz des Frequenzgenerators 4. Der Block 8 stellt eine thermische Verbindung zwischen dem Piezoelement 3 und dem Wickelkörper 5 dar. Anhand dieser Figur wird ersichtlich, daß beide Lichtstrahlen, die jeweils in die Enden der Lichtleitfaser eingespeist werden, abgesehen von der modulierten Faserlänge, die exakt gleichen Bedingungen bezüglich der aufgrund von Temperaturunterschieden einzelner Baugruppen variierende Faserlänge vorfinden. Eine Erwärmung des Piezoelements und damit eine Dehnung der darauf befindlichen Lichtleitfaser 1 bewirkt über die thermische Verbindung (Block 8) eine ebensolche Dehnung der auf dem Wickelkörper 5 befindlichen Faser.

Fig. 2 zeigt eine mögliche Ausführungsart einer thermischen Verbindung von Modulationseinrichtung und Wickelkörper 5. Die Modulationseinrichtung 2 mit dem auf einem Zylinder befestigten Piezoelement 3 ist an einem Gehäuse 10 beispielsweise mit einer Klebeverbindung befestigt. Das Gehäuse besteht vorzugsweise aus thermisch trägem Material bei gleichzeitig guter thermischer Leitfähigkeit. An dem Gehäuse ist weiterhin der Wickelkörper 5 befestigt. In dem dargestellten Fall ist der Wickelkörper mit der Modulationseinrichtung identisch, d.h., er besteht aus einem Zylinder 11 mit Piezoelement 12. Der Vorteil der Identität liegt darin, daß der thermische Ausdehnungskoeffizient, die Abmessungen und die thermischen Übergänge absolut gleich sind. Die Anzahl der Windungen auf den beiden Körpern ist gleich.

Wie schon erwähnt, können die Parameter Windungszahl, Abmessungen und Trägermaterial zwischen den beiden Körpern unterschiedlich sein; wesentlich ist, daß Temperaturänderungen zu gleichen Längenänderungen der beiden Teile der Lichtleitfaser führen.

**Patentansprüche**

1. Einrichtung zur Messung der Drehgeschwindigkeit, bei der durch Strahlteilung zwei Lichtstrahlen erzeugt werden, die nach gegensinnigem Durchlaufen eines geschlossenen Lichtwegs durch eine Lichtleitfaser einander überlagert werden und bei der eine Auswerteeinrichtung vorgesehen ist, die die durch den Sagnac-Effekt bedingte Phasenverschiebung auswertet und wobei nur eine in dem Lichtweg angeordnete insbesondere piezoelektrische Modulationseinrichtung vorgesehen ist zur Modulation des Lichts auf einem Teil des Lichtweges, dadurch gekennzeichnet, daß ein symmetrisch bezüglich des Strahlteilers (13) zu dem Teil des Lichtweges angeordneter zweiter Teil des Lichtweges thermisch mit der Modulationseinrichtung (3) verbunden ist.

2. Einrichtung nach Anspruch 1, dadurch gekennzeichnet, daß die Modulationseinrichtung (2) ein zylindrisches Piezoelement (3) aufweist, auf welches der Teil des Lichtweges aufgewickelt ist und der zweite Teil des Lichtweges auf einen Wickelkörper (5) gewickelt ist.

3. Einrichtung nach Anspruch 2, dadurch gekennzeichnet, daß der Temperaturausdehnungskoeffizient von Wickelkörper (5) und Piezoelement (3) gleich groß ist und die beiden Teile des Lichtweges die gleiche Länge aufweisen.

4. Einrichtung nach Anspruch 2, dadurch gekennzeichnet, daß der Temperaturausdehnungskoeffizient von Wickelkörper (5) und Piezoelement (3) unterschiedlich ist und die beiden Teile des Lichtweges unterschiedliche Längen aufweisen.

5. Einrichtung nach einem der vorherigen Ansprüche, dadurch gekennzeichnet, daß der Wickelkörper (5) ein nicht angesteuertes Piezoelement ist.

**Claims**

1. Apparatus for measuring rotational speed, in which two light beams are generated by beam division, which after passage in opposite directions along a closed light path are superimposed by means of an optical fibre, and in which an analyis device is provided which analyses the phase displacement caused by the Sagnac effect, and in which only one in particular piezoelectric modulator disposed in the light path is provided for modulating the light on one part of the light path, characterised in that a second part of the light path disposed symmetrically in respect of the beam divider (13) to the part of the light path is connected thermally to the modulator (3).

2. Apparatus according to claim 1, characterised in that the modulator (2) comprises a cylindrical piezo element (3) onto which the part of the light path is wound and the second part of the light path is wound onto a former (5).

3. Apparatus according to claim 2, characterised in that the temperature expansion coefficient of former (5) and piezo element (3) is the same value and the two parts of the light path have the same length.

4. Apparatus according to claim 2, characterised in that the temperature expansion coefficient of former (5) and piezo element (3) is different and the two parts of the light path have different lengths.

5. Apparatus according to any one of the preceding claims, characterised in that the former (5) is a non-actuated piezo element.

**Revendications**

1. Dispositif pour mesurer la vitesse de rotation, dans lequel par subdivision d'un faisceau, on forme deux faisceaux de lumière, qui, après avoir parcouru un trajet fermé, en des sens opposés, dans une fibre optique, sont superposés entre eux et dans lequel il est prévu un dispositif d'évaluation, qui évalue le déphasage provoqué par l'effet Sagnac et dans lequel un seul dispositif de modulation, notamment piézoélectrique, disposé dans le trajet de la lumière, est prévu pour moduler la lumière sur une première partie de son trajet, caractérisé en ce qu'une seconde partie, qui est symétrique de la première partie du trajet de la lumière par rapport au diviseur de faisceau (13), est raccordée thermiquement au dispositif de modulation (3).

2. Dispositif selon la revendication 1, caractérisé en ce que le dispositif de modulation (2) comporte un élément piézoélectrique (3), sur lequel la première partie du trajet de la lumière est enroulé, tandis que la seconde partie du trajet de la lumière est enroulé sur un corps de bobinage (5).

3. Dispositif selon la revendication 2, caractérisé en ce que les coefficients de dilatation thermique du corps de bobinage (5) et de l'élément piézoélectrique (3) sont égaux et que les deux parties du trajet de la lumière possèdent la même longueur.

4. Dispositif selon la revendication 2, caractérisé en ce que les coefficients de dilatation thermique du corps de bobinage (5) et de l'élément piézélectrique (3) sont différents et que les deux parties du trajet de la lumière possèdent des longueurs différentes.

5. Dispositif selon l'une des revendications précédentes, caractérisé en ce que le corps de bobinage (5) est un élément piézoélectrique non commandé.

FIG.1

FIG.2

5